# EUROPÄISCHE PATENTANMELDUNG

(11) **EP 3 544 295 A1**
(43) Veröffentlichungstag der Anmeldung: **25.09.2019**
(21) Anmeldenummer: 19155967.3
(22) Anmeldetag: 07.02.2019
(51) Int. Cl.: H04N 9/31, F21V 14/00

(54) **VIDEOPROJEKTIONSVORRICHTUNG**

(30) Priorität: 12.03.2018 DE 102018105621
(71) Anmelder: Salzbrenner STW-Inside GmbH, 96155 Buttenheim (DE)
(72) Erfinder: Salzbrenner, Thomas, 96123 Litzendorf (DE)
(74) Vertreter: Zimmermann & Partner Patentanwälte mbB

(57) **Zusammenfassung**

Die Erfindung betrifft eine Videoprojektionsvorrichtung (1) mit einem Videoprojektor (2), der zur Projektion von Videoausgangssignalen auf eine Videoprojektionsfläche (6) ausgebildet ist, und einer Bilderfassungsvorrichtung (7), die zur Erfassung von Positionsdaten einer zwischen dem Videoprojektor (2) und der Videoprojektionsfläche (6) positionierten Person (10) und zur Weiterleitung dieser Positionsdaten an einen Prozessor (11) ausgebildet ist, wobei der Prozessor (11) mit einem Videosignaleingangsbereich (13) und der Bilderfassungsvorrichtung (7) verbunden ist und dazu ausgebildet ist, über den Videosignaleingangsbereich (13) angelieferte Daten-, Bild- und/oder Videosignale zu empfangen, die von der Bilderfassungsvorrichtung (7) bereitgestellten Positionsdaten zu empfangen und unter Verwendung der angelieferten Daten-, Bild- und/oder Videosignale und der Positionsdaten Videoausgangssignale zu ermitteln, in welchen die zwischen dem Videoprojektor (2) und der Videoprojektionsfläche (6) positionierte Person (10) anstrahlende Videoinhalte der Videoausgangssignale als Schwarzsignal enthalten sind.

## Beschreibung

Die Erfindung betrifft eine Videoprojektionsvorrichtung, die einen Videoprojektor aufweist, der zur Projektion eines Videoausgangssignals auf eine Videoprojektionsfläche ausgebildet ist.

Derartige Videoprojektionsvorrichtungen sind bereits bekannt. Sie werden beispielsweise bei Vorträgen verwendet, bei denen ein Referent unter Verwendung von auf die Videoprojektionsfläche projizierten Daten-, Bild- oder Videobeiträgen, die nachfolgend stets mit der gemeinsamen Bezeichnung Videoausgangssignale benannt werden, Erläuterungen zu den auf die Videoprojektionsfläche projizierten Videoausgangssignalen gibt. Dabei steht oder bewegt sich der Referent in den meisten Fällen im Bereich zwischen dem Videoprojektor und der Videoprojektionsfläche hin und her, so dass er sich während seiner Erläuterungen im Ausstrahlungsbereich der Videoausgangssignale befindet. Da seine Blickrichtung dabei des Öfteren von der Videoprojektionsfläche in Richtung des Videoprojektors gerichtet ist, in welcher sich auch seine Zuhörerschaft befindet, wird er dabei von den ausgestrahlten Videoausgangssignalen des Videoprojektors geblendet.

Die Aufgabe der Erfindung besteht darin, eine Videoprojektionsvorrichtung anzugeben, bei welcher dieser Nachteil nicht auftritt.

Diese Aufgabe wird durch eine Videoprojektionsvorrichtung mit den im Anspruch 1 angegebenen Merkmalen gelöst. Diese Videoprojektionsvorrichtung weist einen Videoprojektor, der zur Projektion eines Videoausgangssignals auf eine Videoprojektionsfläche ausgebildet ist, und eine Bilderfassungsvorrichtung auf, die zur Erfassung von Positionsdaten einer zwischen dem Videoprojektor und der Videoprojektionsfläche positionierten Person und zur Weiterleitung dieser Positionsdaten an einen Prozessor ausgebildet ist, wobei der Prozessor mit einem Videosignaleingangsbereich und der Bilderfassungsvorrichtung verbunden ist und dazu ausgebildet ist, über den Videosignaleingangsbereich angelieferte Videosignale zu empfangen, die von der Bilderfassungsvorrichtung bereitgestellten Positionsdaten zu empfangen und unter Verwendung der angelieferten Videosignale und der Positionsdaten Videoausgangssignale zu ermitteln, in welchen die zwischen dem Videoprojektor und der Videoprojektionsfläche positionierte Person anstrahlende Videoinhalte als Schwarzsignal enthalten sind.

Es wird folglich unter Verwendung einer Bilderfassungsvorrichtung die momentane Position einer zwischen dem Videoprojektor und der Videoprojektionsfläche positionierten Person ermittelt und unter Auswertung der Ausgangssignale der Bilderfassungsvorrichtung Videoausgangssignale ermittelt, in welchen die die Person direkt anstrahlenden Videosignalbestandteile durch ein Schwarzsignal ersetzt sind.

Vorzugsweise entsprechen diejenigen Bestandteile der Videoausgangssignale des Projektors, die durch ein Schwarzsignal ersetzt sind, dem Bereich des Kopfes der Person, so dass insbesondere die Augen der Person nicht mit blendenden Videoausgangssignalen beaufschlagt werden.

Alternativ dazu ist es auch möglich, diejenigen Bestandteile des Videoausgangssignals des Videoprojektors, die durch ein Schwarzsignal ersetzt sind, dem Bereich des Oberkörpers der Person oder dem Bereich des gesamten Körpers der Person zuzuordnen.

Da mittels der Bilderfassungsvorrichtung die momentane Position der Person in sehr kurzer Zeit erkannt werden kann, können die ermittelten Positionsdaten auch in sehr kurzer Zeit zur Ermittlung von Videoausgangssignalen verwendet werden, in denen die zwischen dem Videoprojektor und der Videoprojektionsfläche positionierte Person anstrahlende Videoinhalte der Videoausgangssignale als Schwarzsignal enthalten sind. Dies gilt vor allem auch dann, wenn die genannte Person sich vor der Videoprojektionsfläche hin und her oder vor und zurück bewegt.

Gemäß einer Ausführungsform der Erfindung sind der Videoprojektor in einem Videoprojektorgehäuse und der Prozessor in einem Prozessorgehäuse angeordnet und das Videoprojektorgehäuse ist mit dem Prozessorgehäuse über Signalverbindungen gekoppelt.

Gemäß einer Ausführungsform der Erfindung sind der Videoprojektor und der Prozessor in einem gemeinsamen Videoprojektorgehäuse angeordnet.

Gemäß einer Ausführungsform der Erfindung ist die Bilderfassungsvorrichtung zur Erfassung von dem Kopf der zwischen dem Videoprojektor und der Videoprojektionsfläche positionierten Person zugehörigen Positionsdaten ausgebildet.

Gemäß einer Ausführungsform der Erfindung ist die Bilderfassungsvorrichtung zur Erfassung von dem gesamten Körper der zwischen dem Videoprojektor und der Videoprojektionsfläche positionierten Person zugehörigen Positionsdaten ausgebildet.

Gemäß einer Ausführungsform der Erfindung ist die Bilderfassungsvorrichtung in, an, auf oder neben dem Videoprojektorgehäuse oder dem gemeinsamen Videoprojektorgehäuse positioniert.

Gemäß einer Ausführungsform der Erfindung weist die Bilderfassungsvorrichtung eine oder mehrere Kameras auf.

Gemäß einer Ausführungsform der Erfindung weist die Bilderfassungsvorrichtung eine oder mehrere Infrarotkameras auf.

Gemäß einer Ausführungsform der Erfindung ist der Prozessor zur Ausgabe von Steuersignalen an die Bilderfassungseinrichtung ausgebildet.

Gemäß einer Ausführungsform der Erfindung weist die Videoprojektionsvorrichtung eine Bedieneinheit auf und der Prozessor ermittelt die Steuersignale für die Bilderfassungseinrichtung durch eine Auswertung von mittels der Bedieneinheit eingegebenen Bediensignalen.

Gemäß einer Ausführungsform der Erfindung ist die Bedieneinheit dazu ausgebildet, Bediensignale einzugeben, die den Bilderfassungsbereich der Bilderfassungsvorrichtung definieren.

Gemäß einer Ausführungsform der Erfindung ist die Bedieneinheit dazu ausgebildet, Bediensignale einzugeben, die den Projektionswinkel des auf die Videoprojektionsfläche zu projizierenden Videoausgangssignals definieren.

Gemäß einer Ausführungsform der Erfindung ist die Bedieneinheit dazu ausgebildet ist, Bediensignale einzugeben, durch welche die Form und/oder Größe des Schwarzsignals einstellbar und/oder veränderbar ist.

Gemäß einer Ausführungsform der Erfindung ist der Prozessor dazu ausgebildet, ein Videoausgangssignal zu ermitteln, in welchem das Schwarzsignal nur im Bereich des Kopfes oder nur im Bereich des gesamten Körpers der zwischen dem Videoprojektor und der Videoprojektionsfläche positionierten Person enthalten ist.

Gemäß einer Ausführungsform der Erfindung ist der Prozessor dazu ausgebildet, ein Videoausgangssignal zu ermitteln, in welchem das Schwarzsignal in einem den Kopf und einem den Kopf umgebenden Nahbereich der zwischen dem Videoprojektor und der Videoprojektionsfläche positionierten Person enthalten ist.

Gemäß einer Ausführungsform der Erfindung ist der Prozessor dazu ausgebildet, ein Videoausgangssignal zu ermitteln, in welchem das Schwarzsignal in einem dem gesamten Körper und einem den gesamten Körper umgebenden Nahbereich der zwischen dem Videoprojektor und der Videoprojektionsfläche positionierten Person enthalten ist.

Gemäß einer Ausführungsform der Erfindung weist die Videoprojektionsvorrichtung eine Betriebsart auf, in welcher der Prozessor Videoausgangssignale derart ermittelt, dass der Videoprojektor als Spot-Scheinwerfer zur Anstrahlung der zwischen dem Videoprojektor und der Videoprojektionsfläche positionierten Person arbeitet.

Gemäß einer Ausführungsform der Erfindung weist die Videoprojektionsvorrichtung eine Betriebsart auf, in welcher der Prozessor Videoausgangssignale derart ermittelt, dass der Videoprojektor sich vom Kopf der zwischen dem Videoprojektor und der Videoprojektionsfläche positionierten Person unterscheidende Körperteile als Projektionsfläche für Videoeffektsignale verwendet.

Weitere vorteilhafte Eigenschaften der Erfindung ergeben sich aus deren nachfolgender beispielhafter Erläuterung anhand der Zeichnungen. Es zeigt
- Figur 1 eine Blockdarstellung einer Videoprojektionsvorrichtung gemäß einem ersten Ausführungsbeispiel für die Erfindung und
- Figur 2 eine Blockdarstellung einer Videoprojektionsvorrichtung gemäß einem zweiten Ausführungsbeispiel für die Erfindung.

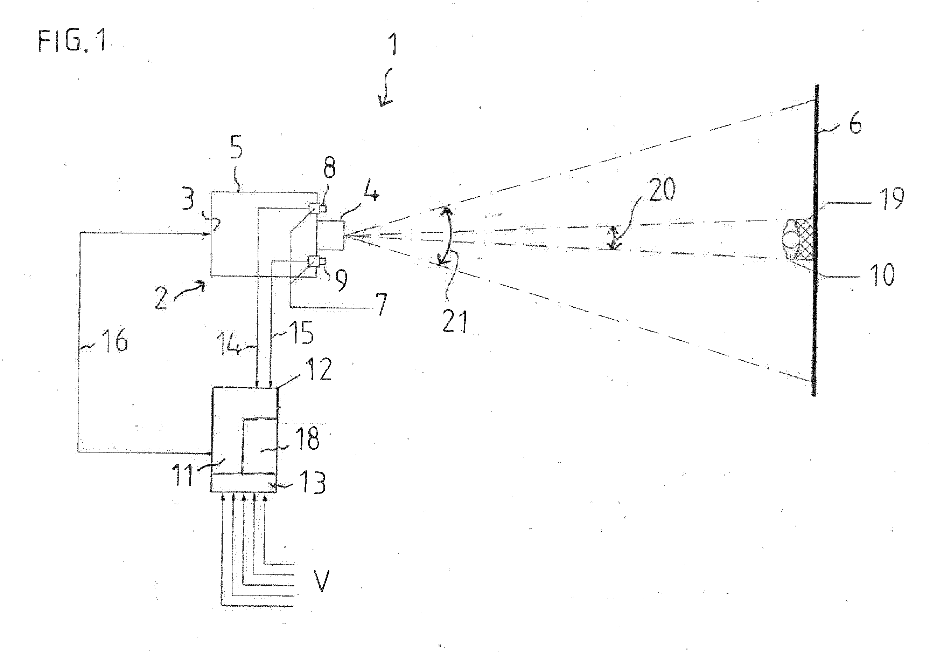

Die in der Figur 1 dargestellte Videoprojektionsvorrichtung 1 weist einen Videoprojektor 2 auf, der in einem Videoprojektorgehäuse 5 angeordnet ist. Das Videoprojektorgehäuse 5 weist einen Eingangsanschluss 3 auf, über welchen dem Videoprojektor 2 zu projizierende Videosignale zugeführt werden. Des Weiteren weist der Videoprojektor 2 ein Objektiv 4 auf, mittels welchem Videoausgangssignale des Videoprojektors 2 in Richtung einer Videoprojektionsfläche 6, bei der es sich um eine Leinwand oder eine Zimmerwand handelt, ausgestrahlt werden. Der Projektionswinkel 21 des Videoprojektors 2 ist in der Figur 1 von gestrichelten Linien begrenzt dargestellt.

Des Weiteren weist die in der Figur 1 gezeigte Videoprojektionsvorrichtung 1 eine Bilderfassungsvorrichtung 7 auf, zu welcher beim gezeigten Ausführungsbeispiel zwei Kameras 8 und 9 gehören. Diese Kameras 8 und 9 sind vorzugsweise im oder am Videoprojektorgehäuse 5 befestigt. Sie können aber auch alternativ dazu unabhängig vom Videoprojektorgehäuse 5 beispielsweise links und rechts neben diesem angeordnet sein oder auf dem Videoprojektorgehäuse 5 positioniert sein. Bei den Kameras handelt es sich vorzugsweise um Infrarotkameras. Gemäß einer Ausführungsform kann die Bilderfassungsvorrichtung 7 zusätzlich auch einen oder mehrere Infrarot-Scheinwerfer aufweisen, welche die beiden Kameras insbesondere beim Vorliegen dunkler Projektionen Unterstützung bei der Bildaufnahme leisten.

Die genannten Kameras 8 und 9 sind dazu ausgebildet, Positionsdaten zu erfassen, die einer sich zwischen dem Videoprojektor 2 und der Videoprojektionsfläche 6 aufhaltenden Person zugeordnet sind, bei der es sich beispielsweise um einen Referenten handelt. Diese Positionsdaten, werden über Signalverbindungen 14 und 15, bei denen es sich um Signalkabel handeln kann, an einen Prozessor 11 weitergeleitet, der in einem Prozessorgehäuse 12 angeordnet ist.

Im Prozessorgehäuse 12 ist des Weiteren ein Videosignaleingangsbereich 13 vorgesehen, welchem von außen Daten- oder Videosignale V zugeführt werden, die mittels des Videoprojektors 2 ausgestrahlt und auf der Videoprojektionsfläche 6 angezeigt werden sollen. Diese Daten- oder Videosignale können in unterschiedlichen Formaten vorliegen. Beispielsweise kann es sich bei diesen Signalen um FBAS-Signale, YC-Signale, HDMI-Signale, DVI-Signale, RGB-Signale, SDI-Signale, HDSDI-Signale oder Signale eines anderen Formates handeln. Bei diesen Signalen kann es sich auch um von einem PC bereitgestellte Bilder handeln, die in Dateiform vorliegen, beispielsweise als Worddatei, PDF-Datei, JPEG-Datei oder Excel-Datei.

Im Videosignaleingangsbereich 13 erfolgen eine Auswahl eines gewünschten Signalformates und eine Weiterleitung der ausgewählten Eingangssignale an den Prozessor 11.

Der Prozessor 11, der mit dem Videosignaleingangsbereich 13 und der Bilderfassungsvorrichtung 7, d.h. den beiden Kameras 8 und 9, verbunden ist, ist dazu ausgebildet, die ihm über den Videosignaleingangsbereich 13 angelieferten Eingangssignale und die von der Bilderfassungsvorrichtung 7 bereitgestellten Positionsdaten zu empfangen und auszuwerten und unter Verwendung der angelieferten Eingangssignale und der Positionsdaten Videoausgangssignale zu ermitteln, in welchen die zwischen dem Videoprojektor und der Projektionsfläche positionierte Person anstrahlende Videoinhalte der Videoausgangssignals als Schwarzsignal enthalten sind.

Diese Videoausgangssignale, in welchen die zwischen dem Videoprojektor und der Projektionsfläche positionierte Person anstrahlende Videoinhalte der Videoausgangssignale als Schwarzsignal enthalten sind, werden vom Prozessor aus über eine Signalverbindung 16, bei der sich um ein Signalkabel handeln kann, dem Eingangsanschluss 3 des Videoprojektors 2 zugeführt und dann über das Objektiv 4 des Videoprojektors 2 in Richtung der Videoprojektionsfläche 6 ausgestrahlt. In diesen über das Objektiv 4 ausgestrahlten Videoausgangssignalen sind diejenigen Videoinhalte als Schwarzsignal enthalten, die direkt auf die zwischen dem Videoprojektor 2 und der Videoprojektionsfläche positionierte Person gerichtet sind. Dies hat den Vorteil, dass diese Person durch die vom Videoprojektor ausgestrahlten Videoausgangssignale nicht geblendet wird. Die nicht direkt auf die zwischen dem Videoprojektor 2 und der Videoprojektionsfläche 6 aufhaltende Person gerichteten Videoausgangssignale des Videoprojektors 2 werden in üblicher Weise auf die Videoprojektionsfläche 6 projiziert, so dass die den Ausführungen des Referenten folgende Zuhörerschaft die Ausführungen des Referenten anhand des projizierten Videosignals nachvollziehen kann. Dabei befindet sich direkt hinter dem Referenten ein Schattenwurfbereich 19. Dies hat zur Folge, dass auf dem Teil der Videoprojektionsfläche 6, der dem Schattenwurfbereich entspricht, ein Dunkelgrau- oder Schwarzsignal angezeigt wird.

In der Figur 1 ist der sich in Horizontalrichtung erstreckende Projektionswinkel, in welchem die Videoausgangssignale des Videoprojektors 2 ausgestrahlt werden, mit der Bezugszahl 21 veranschaulicht. Dieser sich in Horizontalrichtung erstreckende Projektionswinkel 21 ist so gewählt, dass das projizierte Bild sich in etwa über die gesamte Breite der Videoprojektionsfläche 6 erstreckt. Nicht in der Figur 1 dargestellt ist der sich in Vertikalrichtung erstreckende Projektionswinkel, der vorzugsweise so gewählt ist, dass das projizierte Bild sich in etwa über die gesamte Höhe der Videoprojektionsfläche 6 erstreckt.

Am Prozessorgehäuse 12 ist eine Bedieneinheit 18 vorgesehen. Diese Bedieneinheit weist Zifferntasten, Funktionstasten und Cursorsteuertasten auf. Die Bedieneinheit ist zur Eingabe von Bediensignalen ausgebildet, anhand welcher der Prozessor 11 die Ausstrahlung der Videoausgangssignale steuert.

Beispielsweise sind durch eine Betätigung der Bedientasten Eckmarkierungen auf der Videoprojektionsfläche einblendbar, mittels welcher vor dem Beginn des Vortrages des Referenten einmalig der Projektionsbereich und damit der Bereich, in welchem dann später während des Vortrages die Positionsdaten des Referenten ermittelt werden sollen, festgelegt wird.

Des Weiteren kann mittels der Bedieneinheit festgelegt werden, welches der verschiedenformatigen Eingangssignale des Videosignaleingangsbereiches zur Projektion verwendet werden soll.

Darüber hinaus kann mittels der Bedieneinheit ausgewählt werden, welcher Körperteil oder welche Körperteile des Referenten mit einem Schwarzsignal beaufschlagt werden sollen, um den gewünschten Blendschutz zu erreichen. Beispielsweise kann mittels der Bedieneinheit festgelegt werden, dass nur der Bereich des Kopfes des Referenten mit einem Schwarzsignal beaufschlagt werden soll, was grundsätzlich zur Erzielung des gewünschten Blendschutzes ausreicht. Alternativ dazu kann mittels der Bedieneinheit festgelegt werden, dass der Bereich des Kopfes und des gesamten Oberkörpers des Referenten mit einem Schwarzsignal beaufschlagt werden soll. Eine weitere Alternative besteht darin, mittels der Bedieneinheit festzulegen, dass der Bereich des gesamten Körpers des Referenten mit einem Schwarzsignal beaufschlagt werden soll. Weitere alternative Möglichkeiten bestehen darin, mittels der Bedieneinheit festzulegen, dass sich die Beaufschlagung mit dem Schwarzsignal nicht nur auf den Bereich des Kopfes, des Kopfes und des Oberkörpers oder des gesamten Körpers des Referenten erstecken soll, sondern auch auf den vorgenannten Körperteilen unmittelbar benachbarte Bereiche.

Eine weitere Ausführungsform besteht darin, mittels der Bedieneinheit die Größe und/oder die Form des Schwarzsignals einzustellen oder auch während des Vortrags des Referenten zu verändern.

Ferner kann mittels der Bedieneinheit eine Betriebsartauswahl der Videoprojektionsvorrichtung erfolgen, wie es nachstehend beispielhaft erläutert wird.

Eine Betriebsart der Videoprojektionsvorrichtung besteht darin, eine Videoprojektion mit Blendschutz einer sich zwischen dem Videoprojektor und der Videoprojektionsfläche aufhaltenden Person durchzuführen, wie es oben beschrieben wurde.

Eine weitere Betriebsart der Videoprojektionsvorrichtung besteht darin, eine Videoprojektion durchzuführen, bei welcher der Prozessor 11 Videoausgangssignale derart ermittelt, dass der Videoprojektor als Spot-Scheinwerfer zur Anstrahlung bzw. Beleuchtung einer zwischen dem Videoprojektor und der Videoprojektionsfläche positionierten Person arbeitet. Diese Beleuchtung kann sich auf den Bereich des gesamten Körpers der zwischen dem Videoprojektor und der Videoprojektionsfläche positionierten Person erstrecken oder auch den Bereich des Kopfes der zwischen dem Videoprojektor und der Videoprojektionsfläche positionierten Person ausnehmen, wobei im letztgenannten Fall der Bereich des Kopfes der zwischen dem Videoprojektor und der Videoprojektionsfläche positionierten Person mit einem Schwarzsignal angestrahlt werden kann.

Eine weitere Betriebsart der Videoprojektionsvorrichtung besteht darin, eine Videoprojektion durchzuführen, bei welcher der Prozessor 11 Videoausgangssignale derart ermittelt, dass der Videoprojektor sich vom Kopf der zwischen dem Videoprojektor und der Videoprojektionsfläche positionierten Person unterscheidende Körperteile bzw. die diese Körperteile bedeckenden Kleidungsstücke als Projektionsfläche für Videoeffektsignale verwendet.

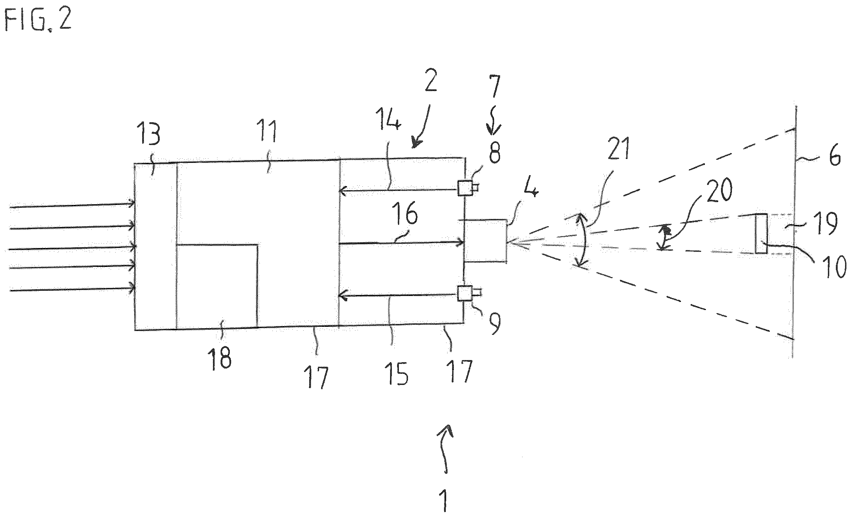

Die Figur 2 zeigt eine Blockdarstellung einer Videoprojektionsvorrichtung gemäß einem zweiten Ausführungsbeispiel für die Erfindung. Dieses zweite Ausführungsbeispiel unterscheidet sich von dem in der Figur 1 gezeigten ersten Ausführungsbeispiel lediglich dadurch, dass der Videoprojektor 2 und der Prozessor 11 in einem gemeinsamen Videoprojektorgehäuse 17 angeordnet sind. In diesem gemeinsamen Videoprojektorgehäuse 17 ist auch der Videoeingangsbereich 13 angeordnet, welchem von außen Daten- und/oder Videoeingangssignale mehrerer unterschiedlicher Signalformate zugeführt werden können. Des Weiteren ist an diesem gemeinsamen Videoprojektorgehäuse 17 auch die Bedieneinheit 18 vorgesehen. Der Vorteil dieses zweiten Ausführungsbeispiels besteht darin, dass es nur eines einzigen Gehäuses bedarf und dass die in der Figur 2 gezeigten Signalverbindungen 14, 15 und 16 nicht zwischen zwei unterschiedlichen Gehäusen geführt werden müssen, sondern innerhalb eines einzigen Gehäuses verlaufen können.

### Bezugszeichenliste

- 1: Videoprojektionsvorrichtung
- 2: Videoprojektor
- 3: Eingangsanschluss des Videoprojektors
- 4: Objektiv
- 5: Videoprojektorgehäuse
- 6: Videoprojektionsfläche
- 7: Bilderfassungsvorrichtung
- 8: Kamera
- 9: Kamera
- 10: Person
- 11: Prozessor
- 12: Prozessorgehäuse
- 13: Videosignaleingangsbereich
- 14: Signalverbindung
- 15: Signalverbindung
- 16: Signalverbindung
- 17: gemeinsames Videoprojektorgehäuse
- 18: Bedieneinheit
- 19: Schattenwurfbereich
- 20: Schwarzsignalwinkel
- 21: Projektionswinkel

## Patentansprüche

1. Videoprojektionsvorrichtung (1) mit
- einem Videoprojektor (2), der zur Projektion von Videoausgangssignalen auf eine Videoprojektionsfläche (6) ausgebildet ist,
- einer Bilderfassungsvorrichtung (7), die zur Erfassung von Positionsdaten einer zwischen dem Videoprojektor (2) und der Videoprojektionsfläche (6) positionierten Person (10) und zur Weiterleitung dieser Positionsdaten an einen Prozessor (11) ausgebildet ist,
- wobei der Prozessor (11) mit einem Videosignaleingangsbereich (13) und der Bilderfassungsvorrichtung (7) verbunden ist und dazu ausgebildet ist, über den Videosignaleingangsbereich angelieferte Daten-, Bild- oder Videosignale zu empfangen, die von der Bilderfassungsvorrichtung bereitgestellten Positionsdaten zu empfangen und unter Verwendung der angelieferten Daten-, Bild- oder Videosignale und der Positionsdaten Videoausgangssignale zu ermitteln, in welchen die zwischen dem Videoprojektor und der Videoprojektionsfläche positionierte Person anstrahlende Videoinhalte als Schwarzsignal enthalten sind.

2. Videoprojektionsvorrichtung nach Anspruch 1, bei welcher der Videoprojektor (2) in einem Videoprojektorgehäuse (5) und der Prozessor (11) in einem Prozessorgehäuse (12) angeordnet sind und das Videoprojektorgehäuse (5) mit dem Prozessorgehäuse (12) über Signalverbindungen (14, 15, 16) gekoppelt ist.

3. Videoprojektionsvorrichtung nach Anspruch 1, bei welcher der Videoprojektor (2) und der Prozessor (11) in einem gemeinsamen Videoprojektorgehäuse (17) angeordnet sind.

4. Videoprojektionsvorrichtung nach einem der vorhergehenden Ansprüche, bei welcher die Bilderfassungsvorrichtung (7) zur Erfassung von dem Kopf der zwischen dem Videoprojektor (2) und der Videoprojektionsfläche (6) positionierten Person zugehörigen Positionsdaten ausgebildet ist oder zur Erfassung von dem gesamten Körper der zwischen dem Videoprojektor (2) und der Videoprojektionsfläche (6) positionierten Person zugehörigen Positionsdaten ausgebildet ist.

5. Videoprojektionsvorrichtung nach einem der vorhergehenden Ansprüche 2 bis 4, bei welcher die Bilderfassungsvorrichtung (7) in, an, auf oder neben dem Videoprojektorgehäuse (5) oder dem gemeinsamen Videoprojektorgehäuse (17) positioniert ist.

6. Videoprojektionsvorrichtung nach einem der vorhergehenden Ansprüche, bei welcher die Bilderfassungsvorrichtung (7) eine oder mehrere Kameras (8), vorzugsweise eine oder mehrere Infrarotkameras, aufweist.

7. Videoprojektionsvorrichtung nach einem der vorhergehenden Ansprüche, bei welcher der Prozessor (11) zur Ausgabe von Steuersignalen an die Bilderfassungseinrichtung (7) ausgebildet ist.

8. Videoprojektionsvorrichtung nach Anspruch 7, welche eine Bedieneinheit (18) aufweist und bei welcher der Prozessor (11) die Steuersignale für die Bilderfassungseinrichtung (7) durch eine Auswertung von mittels der Bedieneinheit eingegebenen Bediensignalen ermittelt.

9. Videoprojektionsvorrichtung nach Anspruch 8, bei welcher die Bedieneinheit (18) dazu ausgebildet ist, Bediensignale einzugeben, die den Bilderfassungsbereich der Bilderfassungsvorrichtung (7) definieren.

10. Videoprojektionsvorrichtung nach Anspruch 8 oder 9, bei welcher die Bedieneinheit (18) dazu ausgebildet ist, Bediensignale einzugeben, die den Projektionswinkel (21) der auf die Videoprojektionsfläche (6) zu projizierenden Videoausgangssignale definieren.

11. Videoprojektionsvorrichtung nach einem der vorhergehenden Ansprüche, bei welcher die Bedieneinheit (18) dazu ausgebildet ist, Bediensignale einzugeben, durch welche die Form und/oder Größe des Schwarzsignals einstellbar und/oder veränderbar ist.

12. Videoprojektionsvorrichtung nach Anspruch 11, bei welcher der Prozessor (11) dazu ausgebildet ist, Videoausgangssignale zu ermitteln, in welchen das Schwarzsignal nur im Bereich des Kopfes oder nur im Bereich des gesamten Körpers der zwischen dem Videoprojektor (2) und der Videoprojektionsfläche (6) positionierten Person enthalten ist.

13. Videoprojektionsvorrichtung nach Anspruch 11, bei welchem der Prozessor (11) dazu ausgebildet ist, Videoausgangssignale zu ermitteln, in welchen das Schwarzsignal in einem den Kopf und einem den Kopf umgebenden Nahbereich oder in einem dem gesamten Körper und einem den gesamten Körper umgebenden Nahbereich der zwischen dem Videoprojektor (2) und der Videoprojektionsfläche (6) positionierten Person enthalten ist.

14. Videoprojektionsvorrichtung nach einem der vorhergehenden Ansprüche, welche eine Betriebsart aufweist, in welcher der Prozessor (11) Videoausgangssignale derart ermittelt, dass der Videoprojektor (2) als Spot-Scheinwerfer zur Anstrahlung der zwischen dem Videoprojektor (2) und der Videoprojektionsfläche (6) positionierten Person arbeitet.

15. Videoprojektionsvorrichtung nach einem der vorhergehenden Ansprüche, welche eine Betriebsart aufweist, in welcher der Prozessor (11) Videoausgangssignale derart ermittelt, dass der Videoprojektor (2) die Kleidungsstücke sich vom Kopf der zwischen dem Videoprojektor (2) und der Videoprojektionsfläche (6) positionierten Person unterscheidender Körperteile als Projektionsfläche für Videoeffektsignale verwendet.
